# EUROPEAN PATENT APPLICATION

(11) **EP 4 629 732 A1**
(43) Date of publication of application: **08.10.2025**
(21) Application number: 24168425.7
(22) Date of filing: 04.04.2024
(51) Int. Cl.: H04W 74/00, H04W 4/70, H04W 88/04

(54) **INTERNET OF THINGS DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Provided is an Internet of Things, loT, device, comprising a transceiver which, in operation, receives a trigger signal; and circuitry which, in operation, determines whether or not the loT device may access an uplink channel for data transmission, based on the trigger signal and a condition which is pre-obtained or indicated by the trigger signal. Provided is a node, comprising circuitry which, in operation, determines a condition for determination of whether or not an Internet of Things, loT, device may access an uplink channel for data transmission; and a transceiver which, in operation, transmits a trigger signal indicating the condition. Provided is a node, comprising circuitry which, in operation, determines a transmitted signal strength of a trigger signal for determination of whether or not an loT device may access an uplink channel for data transmission, based on the trigger signal and a condition; and a transceiver which, in operation, transmits a trigger signal according to the determined transmitted signal strength.

## Description

### BACKGROUND

### 1. Technical field

The present disclosure relates to an loT device and its communication with a node, for example, a base station or an intermediate node connected to a base station.

### 2. Description of the Related Art

The Internet of things (loT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states. Further, due to the lack or RRC states like CONNECTED, IDLE, or INACTIVE, a contention-based channel access may be required to initiate communications. However, the number of A-loT devices within a coverage range of a node could be large, which results in excessive attempts for channel access that cause collisions and performance degradation. In addition, it might be required for a node to determine a proximity of an A-loT device.

### SUMMARY

One non-limiting and exemplary embodiment facilitates an Internet of Things, loT, device communicating with a node.

In an embodiment, the techniques disclosed herein feature: An Internet of Things, loT, device, comprising a transceiver which, in operation, receives a trigger signal; and circuitry which, in operation, determines whether or not the loT device may access an uplink channel for data transmission, based on the trigger signal and a condition which is pre-obtained or indicated by the trigger signal.

In another embodiment, the techniques disclosed herein feature: A node, for example a base station or an intermediate node connected to a base station, comprising circuitry which, in operation, determines a condition for determination of whether or not an Internet of Things, loT, device may access an uplink channel for data transmission; and a transceiver which, in operation, transmits a trigger signal indicating the condition.

In another embodiment, the techniques disclosed herein feature: A node, for example a base station or an intermediate node connected to a base station, comprising circuitry which, in operation, determines a transmitted signal strength of a trigger signal for determination of whether or not an Internet of Things, loT, device may access an uplink channel for data transmission, based on the trigger signal and a condition; and a transceiver which, in operation, transmits a trigger signal according to the determined transmitted signal strength.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-loT device topology;
- **Fig. 3**: illustrates another node-A-loT device topology;

- **Figs. 4 to 9**: illustrate triggering schemes according to embodiments of the disclosure;
- **Fig. 10a**: illustrates the steps of a method performed by a node according to an embodiment of the disclosure;
- **Fig. 10b**: illustrates the steps of a method performed by an loT device according to an embodiment of the disclosure;
- **Fig. 11 to 15**: illustrate further triggering schemes according to embodiments of the disclosure;
- **Fig. 16a**: illustrates a triggering scheme according to an embodiment, wherein a proximity of an loT device may be determined by a node;
- **Fig. 16b**: illustrates a situation, wherein a proximity of an loT device may be determined by a node, according to an embodiment of the disclosure;
- **Fig. 17a**: illustrates a triggering scheme according to an embodiment, wherein a proximity of an loT device may be determined by a node;
- **Fig. 17b**: illustrates a situation, wherein a proximity of an loT device may be determined by a node, according to an embodiment of the disclosure;
- **Fig. 18**: illustrates a triggering scheme, wherein a trigger signal is transmitted via multiple transmission points, according to an embodiment of the disclosure;
- **Fig. 19**: illustrates a general, simplified and exemplary block diagram of an loT device and a node;
- **Fig. 20**: illustrates functional structure of the circuitries pertaining to the loT device and the base station; and
- **Fig. 21**: shows exemplary functional split options in 5G O-RAN.

### DETAILED DESCRIPTION

### 5G NR system architecture and protocol stacks

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE.

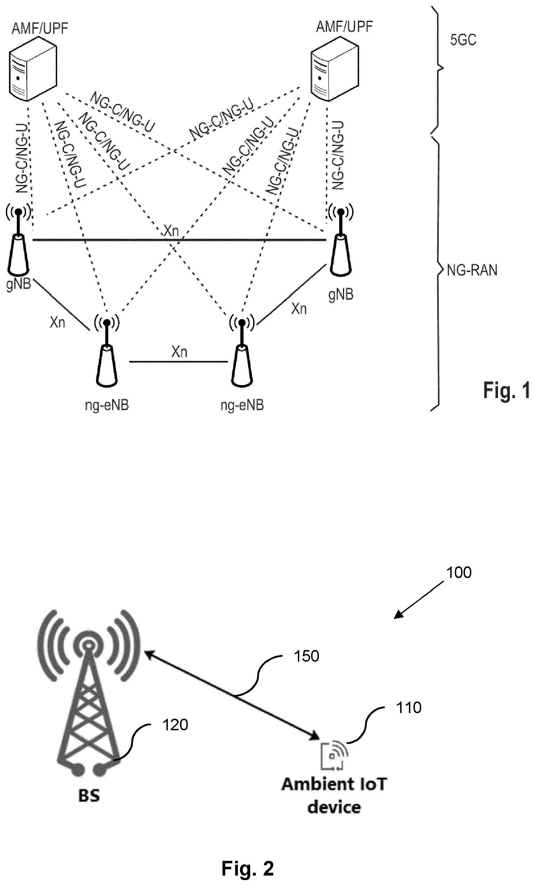

The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or "node" or "reader" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

The present disclosure relates to an A-loT device, a base station, and an intermediate node connected to a base station methods of communication between the A-loT device and the base station and the A-loT device and the intermediate node.

### Topologies

Particularly, two different topologies are exemplarily considered in this disclosure. In a first topology 100 as illustrated in **Fig. 2**, an A-loT device 110 directly and bidirectionally communicates with a base station 120 over a wireless channel 150. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

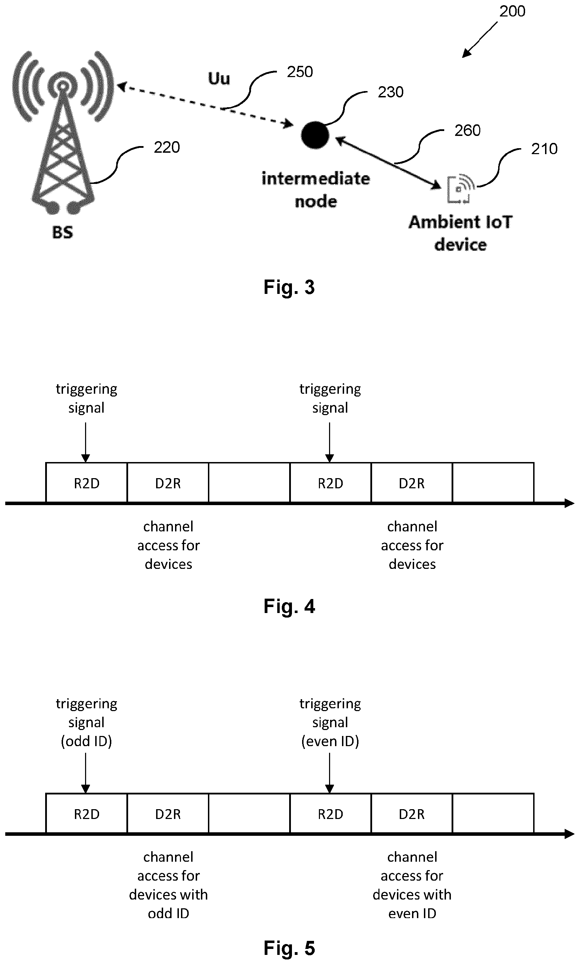

In a second topology as illustrated in **Fig. 3**, an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3**, this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Embodiment 1

In these embodiments, an loT device determines whether or not it may access an uplink channel based on a received trigger signal and a condition, wherein said condition may be pre-obtained or indicated by the trigger signal.

It is provided an (ambient) Internet of Things, loT, device, comprising a transceiver which, in operation receives a trigger signal. The loT device further comprises circuitry which, in operation, determines whether or not the loT device may access an uplink channel for data transmission, based on the trigger signal and a condition which is pre-obtained or indicated by the trigger signal.

It is further provided a node, comprising circuitry which, in operation, determines a condition for determination of whether or not an Internet of Thing, loT, device may access an uplink channel for data transmission; and a transceiver which, in operation, transmits a trigger signal indicating the condition.

**Fig. 4** illustrates a triggering scheme according to the embodiment. Channels (resources or slots of a channel) are indicated as R2D for a downlink channel for transmission of signals from a node to an loT device (reader to device, R2D) and as D2R for an uplink channel for transmission of signals from an loT device to a node (device to reader, D2R). Said channels may also be referred to as PRDCH (Physical Reader to Device Channel) and PDRCH (Physical Device to Reader Channel), respectively. Through the R2D channel, the loT device receives a triggering signal (also referred to as trigger signal). After having received the trigger signal, the loT device determines whether a condition is satisfied. If so, the loT device may transmit data to the node via the D2R channel. It goes without saying that, for instance when the loT device does not have any data that is to be transmitted to the node, it may determine not to transmit a signal via the D2R channel. However, the loT device determines whether it may or may not access the D2R channel. On the other hand, if the loT device determines that it may not access the D2R channel, when the condition is not satisfied, the loT device does not access the D2R channel and, consequently, does not transmit a signal to the node. Thereby, the amount of traffic transmitted via the D2R channel may be reduced, reducing the chances for collisions or data loss. Further, when the loT device determines that it may not access the D2R channel, it may go into a sleep state or another power saving state, thereby reducing its power consumption.

Thus, the loT device determines whether it may access an uplink channel based on the received trigger signal and a condition to facilitate a reduction of traffic on the uplink channel, thereby reducing the chances of occurrence of collisions or data loss. Further, this may facilitate for energy saving of the loT device, since unnecessary data transmissions may be prevented.

### Embodiment 2

According to a second embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal. The loT device then determines that the loT device may access the uplink channel if the identifier associated with the loT device, the priority associated with the loT device, the data to be transmitted by the loT device, the power availability of the loT device, and/or the received signal strength of the trigger signal meets the respective criterion.

Here, and in the following, an identifier associated with an loT device may be any identifier that is assigned to the loT device. The assignment may be done via configuration, signaling, or the like. The assignment may also be pre-determined. That is, the loT device may be associated with an identifier, e.g. by hard coding or the like. It is to be noted that the identifier is not necessarily required to be unique for an loT device. That is, an identifier may be associated with one or more loT device (e.g. a group identifier). On the other hand, an loT device may be associated with a plurality of identifiers. That is, in essence, an identifier may be a value that is assigned to an loT device.

Accordingly, a criterion for an identifier of an loT device may be any criterion which the identifier associated with an loT device has to satisfy for the loT device to determine that it may access the D2R channel. Explicit examples of criteria for an identifier of an loT device are described in the subsequent embodiments.

Here, and in the following, a priority associated with the loT device may be a measure indicating a priority level assigned to the loT device. The assignment may be done via configuration, signaling, or the like. Further, the priority associated with the loT device may be determined by the loT device itself, for instance based on a device and/or service type, a time gap between the last transmission of data and the time of reception of the trigger signal. Further, the loT device may determine its priority based on a number of (previous) failed transmissions. Explicit examples of priorities and/or their determination are described in the subsequent embodiments.

Accordingly, a criterion for a priority associated with an loT device may be any criterion which the priority associated with the loT device has to satisfy for the loT device to determine that it may access the D2R channel. Explicit examples of criteria for a priority associated with an loT device are described in the subsequent embodiments.

Here, and in the following, data to be transmitted by the loT device may be any data the loT device is to transmit to a node. For example, this data may refer to sensing data, control data, report data, or the like.

Accordingly, a criterion for data to be transmitted may be any criterion which the data to be transmitted by the loT device has to satisfy for the loT device to determine that it may access the D2R channel. The criterion may relate, for instance, to an amount of data, a type of data, or the like. Explicit examples of criteria for data to be transmitted by an loT device are described in the subsequent embodiments.

Here, and in the following, power availability of the loT device may relate to a power state to the loT device according to remaining power available to the loT device to operate. For example, the available power may be the remaining charging capacity of an internal battery or other power storage device. The available power may be expressed as a power level (e.g. high, medium, low, or the like), according to the amount of remaining available power.

Accordingly, a criterion for power availability of an loT device may be any criterion which the power available to the loT has to satisfy for the loT to determine that it may access the D2R channel. The criterion may relate, for example, to a minimum power level, a maximum power level, as specific power level, or the like. Explicit examples of criteria for power availability of an loT device are described in the subsequent embodiments.

Here, and in the following, a received signal strength may relate to any measure of the amount of power present in the trigger signal. For example, the received signal strength may be measured at the receiving antenna of the transceiver of the loT device.

Accordingly, a criterion for a received signal strength of the trigger signal may be any criterion that the received signal strength, determined by the loT device, has to satisfy for the loT device to determine that it may access the D2R channel. For example, the criterion may relate to a minimum received signal strength, a maximum received signal strength, a signal strength within a certain range, or the like. Explicit examples of criteria for received signal strength of the trigger signal device are described in the subsequent embodiments.

It is to be noted that the described criteria may be combined. That is, the loT may determine whether it may access the D2R channel based on two or more of above-described criteria. In this respect, the loT device may determine that it may access the D2R channel if all of the two or more conditions are satisfied or, alternatively, if at least one of the two or more conditions are satisfied. Whether or not all of the conditions have to be satisfied or at least one of the conditions has to be satisfied may be signaled, configured, pre-determined, or the like.

It is to be noted that, in general, a condition may be indicated in the trigger signal, e.g. by a dedicated condition indicator, which may be implemented using a flag, a syntax element, or the like. In addition or alternatively, the condition may be pre-obtained. That is, the condition may have been previously indicated by a previous trigger signal or other signal, the condition may be configured, assigned, or hardly coded, or the like.

It is noted that in this embodiment as well as in the embodiments described in the following individual implementations of an embodiment and of other embodiments can be combined with each other where considered appropriate.

### Embodiment 3

According to a third embodiment, the trigger signal indicates the criterion for the identifier associated with the loT device. Said criterion indicates a value of a function, which maps identifiers to respective values. The loT device applies the function to the identifier associated with the loT device, and determines that the loT device may access the uplink channel if the result of the function applied to the identifier associated with the loT device corresponds to the value indicated by said criterion.

An identifier associated with the loT device may be a device ID (e.g. a unique PHY ID), that may be pre-defined (e.g. hard-coded), pre-configured, configured, assigned (e.g. temporarily assigned by the network to the loT device), or randomly selected for the loT device.

The reader transmits, by the trigger signal, the criterion (or criteria) for the channel access to initiate contention-based channel access or data transmission.

In an implementation, the criterion may be based on the identifier associated with the loT device being even or odd. In other words, the trigger signal may indicate whether loT devices having an even or odd identifier may access the D2R channel. In other words, the function may be a function that maps the identifier to one of two values, depending on whether the identifier is even or odd.

**Fig. 5** illustrates a triggering scheme according to this implementation of the embodiment of the disclosure. The node transmits, via an R2D channel (leftmost slot illustrated in the figure), a trigger signal indicating that loT devices having an odd identifier associated therewith may access the D2R channel. Hence, an loT device having an odd identifier determines that it may access the D2R channel, e.g. for data transmission. Accordingly, if there is data to be transmitted by such an loT device, said loT device may transmit said data to the reader in a resource of a D2R channel after having received the trigger signal. On the other hand, an loT device having an even identifier associated therewith may not access the D2R channel for data transmission. In a second trigger signal, the reader may indicate that loT devices with an even identifier may access the D2R channel. That is, in resources of the D2R channel temporarily subsequent to the reception of the second trigger signal, only loT devices having an even identifier may access the D2R channel for data transmission.

It is to be noted that the indication of the odd/even criterion may be implemented as a bit, wherein a first bit value indicates that loT devices having an even identifier may access the D2R channel, and a second bit value indicates that loT devices having an odd identifier may access the D2R channel.

In another implementation, the criterion may be based on a value of a modulus function. For example, the criterion may be indicated by an indicator indicating said value of a modulus function, when applied to the identifier associated with an loT device. In other words, the value of the modulus function indicates a remainder of a division of the identifier and a basis of the modulus function. The basis of the modulus function to be applied may be indicated in the trigger signal, may be pre-obtained, pre-defined, configured, or the like.

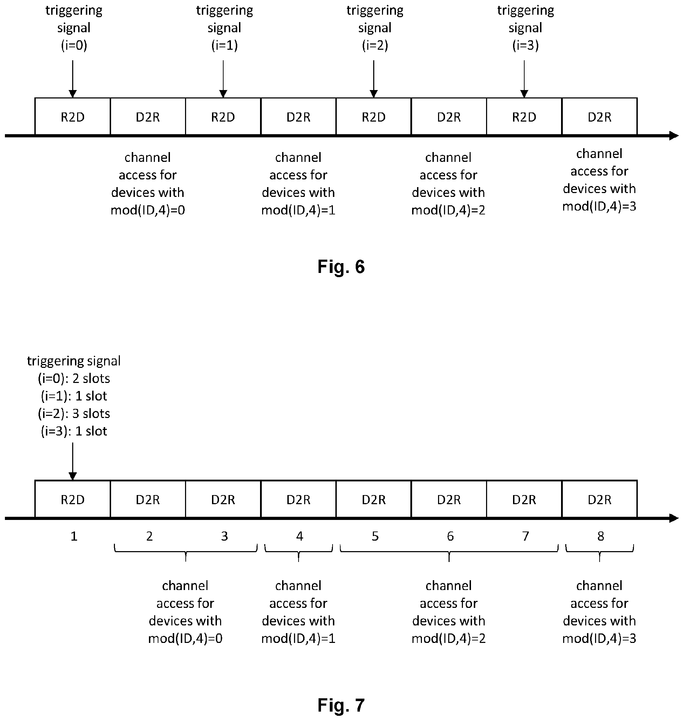

**Fig. 6** illustrates a triggering scheme according to this implementation of the embodiment of the disclosure, wherein a modulus function with a basis of 4 is utilized. However, the disclosure is not limited to said basis, and any other value may be used as well. In a first trigger signal, a value of i=0 is indicated. The loT device applies the modulus function to its identifier(s), e.g. mod(identifier,4) is calculated. If the result of the application corresponds to the value indicated in the trigger signal, the loT device determines that it may access the D2R channel. That is, in the illustrated example, devices with mod(identifier,4)=0 may access the D2R channel subsequent to the reception of the first trigger channel. Similarly, devices with mod(identifier,4)=1, mod(identifier,4)=2, and mod(identifier,4)=3 may access the D2R channel after reception of the second trigger signal indicating i=1, the third trigger signal indicating i=2 and the fourth trigger signal indicating i=3, respectively. IoT devices, whose identifier do not satisfy the condition indicated by the latest trigger signal, do not access the D2R channel.

It is to be noted that, as already indicated above, the reader may adjust the basis of the modulus function and, for example, include an indicator of the adjusted basis in the trigger signal.

According to the implementation, the reader can control the channel access and data transmission for the loT devices by providing the value of the modulus function and, optionally, the basis to be applied.

In an implementation, the trigger signal may indicate, in addition to the criterion, respective resources to be used by the loT devices, in association with respective criterion.

**Fig. 7** illustrates a triggering scheme according to this implementation of the embodiment of the disclosure, wherein a modulus function with a basis of 4 is utilized, four criteria are indicated by the trigger signal, and, further, respective resources are indicated. Specifically, the trigger signal indicates the criteria using a modulus function as described above, wherein for each value of the modulus function, respective resources (in this example in terms of slots) are indicated. That is, for a value i=0, the subsequent 2 slots are indicated, for i=1, one further slot is indicated, for i=2, three further slots are indicated, and for i=3, one further slot is indicated. The loT devices determine whether any of the conditions/criteria is satisfied, for instance, as described above. Further, if one of the criteria is satisfied, the respective resources are determined and the D2R channel may be accessed using said resources. In the illustrated example, an loT device whose identifier satisfies mod(identifier,4)=0 may access the D2R channel using the two slots (i.e. slots 2 and 3) following the reception of the trigger signal. An loT device whose identifier satisfies mod(identifier,4)=1 may access the D2R channel using the one slot (i.e. slot 4) following the reception of the trigger signal and the two slots associated with i=0, and so on. That is, slots 2 and 3 are assigned to loT devices that satisfy mod(identifier,4)=0, slot 4 is assigned to loT devices that satisfy mod(identifier,4)=1, slots 5 to 7 are assigned to loT devices that satisfy mod(identifier,4)=2, and slot 8 is assigned to loT devices that satisfy mod(identifier,4)=3.

According to the implementation, loT devices are indicated with respective slots for channel access and, hence, may transit into a sleep state or power saving state until a channel is to be accessed, since the loT devices are not required to further monitor the R2D channel for further trigger signals.

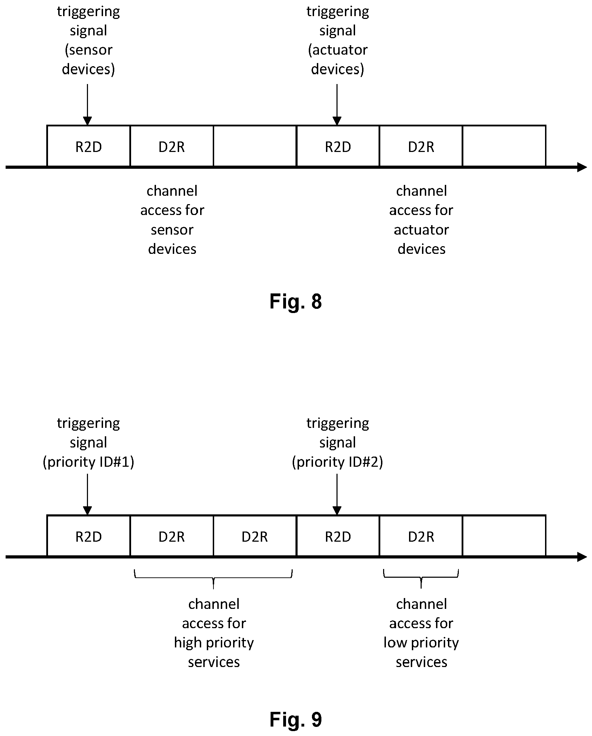

**Fig. 8** illustrates a triggering scheme according to an implementation of the embodiment of the disclosure, wherein certain device types are indicated in the trigger signal. Specifically, in a first trigger signal, it is indicated that loT devices belonging to a group 'sensor devices' may access the D2R channel. Accordingly, only loT devices belonging to said group 'sensor devices' may access the D2R channel subsequent to the reception of the first trigger signal. Further, in a second trigger signal, it is indicated that loT devices belonging to a group 'actuator devices' may access the D2R channel. Accordingly, only loT devices belonging to said group 'actuator devices' may access the D2R channel subsequent to the reception of the second trigger signal.

That is, in the illustrated example, the reader assigns separate slots for sensor and actuator functionalities. In a case where an loT device has only one functionality (e.g. sensing or actuating), it is assigned with only one group identifier and, accordingly, will access the D2R channel only if respective functionality/group identifier is indicated in the trigger signal. On the other hand, if an loT device belongs to both groups (e.g. 'sensing devices' and 'actuating devices'), it may access the D2R channels following reception of both the first and the second trigger signal, respectively.

### Embodiment 4

According to a fourth embodiment, the trigger signal indicates the criterion for the priority associated with the loT device. The loT device determines whether a priority associated with the loT device satisfies the criterion and, accordingly, determines whether the loT device may access the D2R channel.

In an implementation, the loT device determines the priority associated with the loT device according to (i) a configured priority, (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device.

For example, a priority may be indicated in the trigger signal as a priority level or a priority ID. A priority level or ID may be associated with an loT device by hard coding, pre-configuration, configuration, or assignment based on the device and/or service type. In addition or alternatively, the loT device may determine its priority level/ID.

**Fig. 9** illustrates a triggering scheme according to an implementation of the embodiment of the disclosure, wherein two priority levels/IDs are utilized. For example, a first priority level/ID #1 may be assigned for services with low latency requirements and a second priority level/ID #2 may be assigned to services with moderate or low latency requirements. The reader may assign two slots for loT devices associated with priority #1 and one slot for loT devices associated with priority #2 and transmits two trigger signals accordingly. Specifically, in a first trigger signal, priority #1 is indicated. Thus, only loT devices having a priority corresponding to the indicated priority #1 may access the two slots of the D2R channel following reception of the first trigger signal. In a second trigger signal, priority #2 is indicated, resulting in only loT devices associated with a priority corresponding to priority #2 accessing the D2R channel in the slot subsequent to the reception of the second trigger signal.

With this approach, the requirements of different devices/service types may be met. The reader may further determine the priority of the loT devices, according to any response signal transmitted by the loT devices within respective slots.

It is to be noted that the present disclosure is not limited to two priority levels/IDs, and multiple, i.e. three or more priority levels/IDs may be utilized.

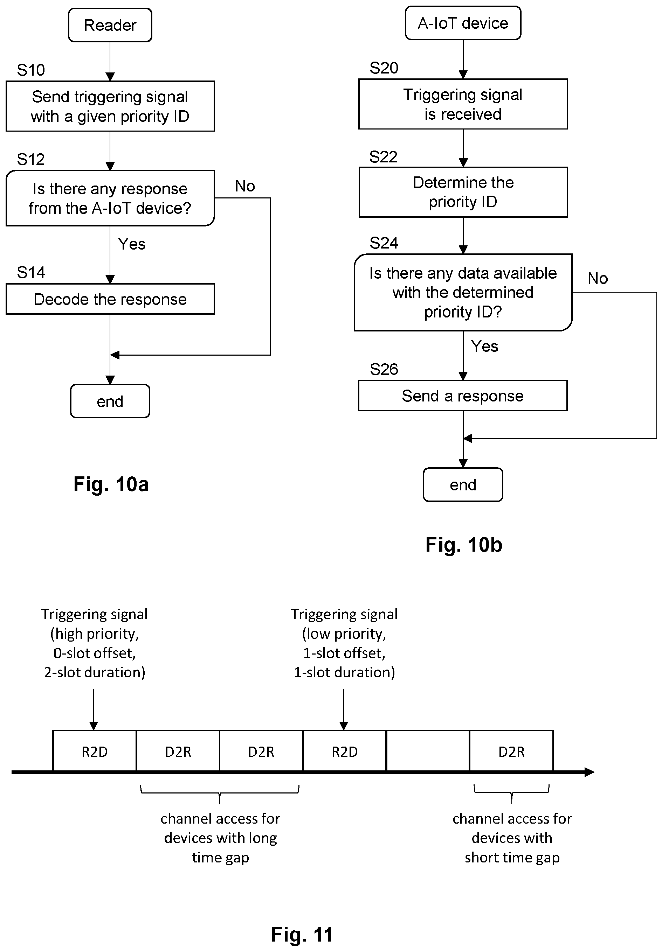

**Fig. 10a** illustrates the steps of a method performed by a node according to the embodiment. In step S10, the reader transmits a trigger signal indicating a priority level/ID. In step S12, the reader determines whether there is any response received following the transmission of the trigger signal. If so (Yes in step S14), the response signal is decoded. Then, the method ends. If no response signal is received by the reader (No in step S12), the method ends.

**Fig. 10b** illustrates the steps of a method performed by an loT device according to the embodiment. In step S20, the trigger signal is received by the loT device. In step S22, the indicated priority level/ID is determined. In step S24, it is determined whether the loT device is associated with the indicated priority ID/level. For example, it may be determined whether there is data to be transmitted, which is associated with the indicated priority level/ID (e.g. data belonging to a low-latency service). If not (No in step S24), the method ends. If such data is available (Yes in step S24), the loT device transmits said data via the D2R channel to the reader.

As already indicated above, the loT device may determine its priority level/ID itself. For example, the priority could be related to a length of a time period between a last transmission of data by the loT device and the reception timing of the trigger signal. For instance, a higher priority level may be determined when said time period is longer. For example, certain time threshold values may be utilized to determine the priority of the loT device. For example, when two priority levels/IDs are utilized, the higher priority level/ID may be determined if the duration of the time period since the last transmission of data is larger than a threshold value. On the other hand, if the duration of the time period is below (or equal to) the time threshold value, the lower priority level/ID may be determined. The reader may then trigger the loT devices with a higher priority for a longer time period first to serve those loT devices earlier.

**Fig. 11** illustrates a triggering scheme according to this implementation of the embodiment. In the illustrated example, the trigger signal does not only carry an indicator indicating the priority level/ID, but indicates the specific resources to be used for channel access. Specifically, in a first trigger signal, a 'high priority' is indicated together with an indication of two slots with zero offset to the transmission of the trigger signal and a duration of two slots. Accordingly, only loT devices associated with the high priority level may access the D2R channel using the indicated slots. In a second trigger signal, a 'low priority' is indicated together with a slot for channel access with 1 slot offset to the transmission of the trigger signal and a duration of one slot. Accordingly, loT devices associated with the low priority may access the D2R channel using the indicated slot.

In an implementation, the priority may be related to the number of failed transmissions of data by the loT device, and/or a number of consecutive negative acknowledgement, NACK, signals received and/or transmitted by the loT device. For instance, the priority levels could be assigned to the number of failed decoded messages, or to the number of transmitted NACKs in a row. With this approach, the reader may assign additional resources (in time, frequency, and/or coding rates, for example) to devices with a higher priority in order to compensate for failed transmissions.

### Embodiment 5

According to a fifth embodiment, the trigger signal indicates the criterion for the data to be transmitted by the loT device. Said criterion relates to at least one of an amount of the data, a type of the data, and/or a delay budget for transmission of the data. In other words, the reader can trigger the loT devices based on their amount of data information, type of information (e.g. data or control information), and/or a delay budget for data transmissions. To achieve a better resource allocation, the reader can allocate resources based on traffics. For example, a different number of slots and/or a different bandwidth could be assigned to loT devices with low and high amounts of data.

For example, the trigger signal includes a resource indicator indicating a bandwidth of the uplink channel to be used if the criterion for the data to be transmitted by the loT device is met.

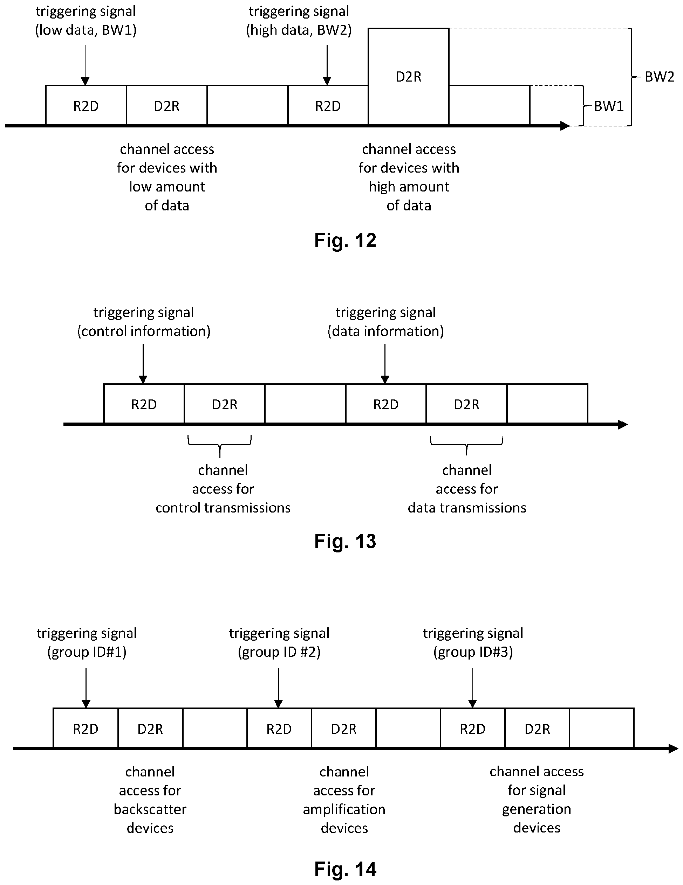

**Fig. 12** illustrates a triggering scheme according to this implementation of the embodiment. In the illustrated example, the trigger signal carries an indication of a criterion related to the amount of data to be transmitted by an loT device together with a respective bandwidth to be utilized. In the illustrated example, data transmissions for loT devices with a low amount of data is performed over bandwidth BW1, whereas data transmissions for devices with a high amount of data is performed over bandwidth BW2. The definition of `low amount of data' and 'high amount of data' may relate to whether or not the amount of data to be transmitted by an loT device is equal to or above a threshold value or below said threshold value. However, multiple threshold values may be used, defining multiple levels of an amount of data. In the illustrated example, a first trigger signal indicates that loT devices having a low amount of data may access the D2R channel using the indicated bandwidth BW1. In a second trigger signal, it is indicated the loT devices having a high amount of data may access the channel using the indicated bandwidth BW2. In this example, BW2 is broader than BW1, according to the high amount of data and the low amount of data, respectively.

In another implementation, the trigger signal may indicate more slots allocated to an loT device having a high amount of data (in addition or instead of a broader bandwidth). In other words, a condition related to the amount of data may be indicated with respective resources (in time, frequency, coding scheme, modulation rate, or the like).

With this approach, a better utilization of the resources may be achieved.

Similarly, the trigger signal may indicate a criterion related to a type of data or a delay budget of data to be transmitted, in order to trigger only loT devices whose data to be transmitted satisfies the indicated criterion.

**Fig. 13** illustrates a triggering scheme according to an implementation of the embodiment, wherein a criterion related to a type of data is utilized. In the illustrated example, the trigger signal carries an indication of a criterion related to the type of data to be transmitted by an loT device. The types of data in this example relate to 'control information' and 'data information'. For example, control information may be data concerning the control of the communication between the loT device and the node, whereas data information may be data not related to control of the communication, and may include, for example, sensor readings, tracking information, actuator state information, device type or power state information, etc. However, the present disclosure is not limited thereto, and data to be transmitted may be assigned to a type of data by implementation. In the illustrated example, a first trigger signal indicates that loT devices having a control information as data to be transmitted may access the D2R channel. Accordingly, loT device having such control information may access the D2R channel after reception of the first trigger signal. In a second trigger signal, it is indicated the loT devices having data information as data to be transmitted may access the D2R channel. Accordingly, loT device having such data information may access the D2R channel after reception of the first trigger signal.

With this approach, the node may, for instance, prioritize the transmission of control information or the transmission of data information by respectively transmitting a trigger signal indicating either control information or data information first.

### Embodiment 6

According to a sixth embodiment, the trigger signal indicates the criterion for the identifier associated with the loT device, wherein said criterion indicates a group identifier. The loT device determines that the loT device may access the uplink channel if the loT device belongs to a group associated with the indicated group identifier.

The group associated with a group identifier may be, for example, a specific device type, such as sensor, inventory, and actuator (see embodiment 3). That is, loT devices associated with said types may be assigned a respective group identifier. The linkage between group identifiers and device types, service types and/or service priority may be pre-defined, pre-configured, configured, assigned, or the like.

For example, different group IDs may be assigned to different device categories, e.g. devices having a backscattering capability (type 1), devices having a signal amplification capability (type 2a), and devices having the capability of generating signals (type 2b).

**Fig. 14** illustrates a triggering scheme according to this implementation of the embodiment. In this example, backscatter devices are assigned to group ID #1, devices with amplification capability are assigned to group ID #2, and devices with signal generation capabilities are assigned to a group ID #3. The reader may then assign different resources to the different device types. In the illustrated example, a first trigger signal carries an identification of group ID #1, resulting in loT devices belonging to said group to determine that they may access the D2R channel following the transmission of the first trigger signal. Similarly, a second and a third trigger signal indicate group ID #2 and #3, respectively, resulting in loT devices belonging to said groups to determine that they may access the D2R channel following respective trigger signal.

With this approach, loT devices having similar characteristics may use the same resources for channel access or data transmission. For example, transmissions performed by devices having a lower signal level (e.g. backscattering devices, type 1) may not be affected by high power transmission, as would be performed by devices with amplification capability or signal generation capability (types 2a and 2b, for example), resulting in a reduction of data loss.

### Embodiment 7

According to a seventh embodiment, the trigger signal indicates the criterion for power availability of the loT device, wherein said criterion indicates a power level. The loT device determines a power level of the loT device according to available amount of power, and determines that the loT device may access the uplink channel if the determined power level of the loT device corresponds to the power level indicated by said criterion.

In an implementation, if the loT device may access the D2R channel and a determined power level of the loT device is equal to or less than a predetermined power level, the loT device may transmit data via the uplink channel, receive a carrier wave, and harvests power from said carrier wave. For example, the predetermined power level may be a power level associated with a low power state of the loT device.

For example, different power levels (e.g. states) may be defined for loT devices. For instance, a low power level (wherein the device can transmit only a limited amount of data like control information) and a high power level (wherein the device can transmit more information, like data and control information) may be defined. However, the present disclosure is not limited to two power levels, and a plurality of power levels may be defined depending on the amount of power available to a respective loT device.

The reader may indicate in a trigger signal that loT devices associated with a low power level may access the D2R channel and, if a transmission by such an loT device is received in response to the trigger signal, transmit a carrier wave in order to allow the low power loT device to harvest energy from said carrier wave.

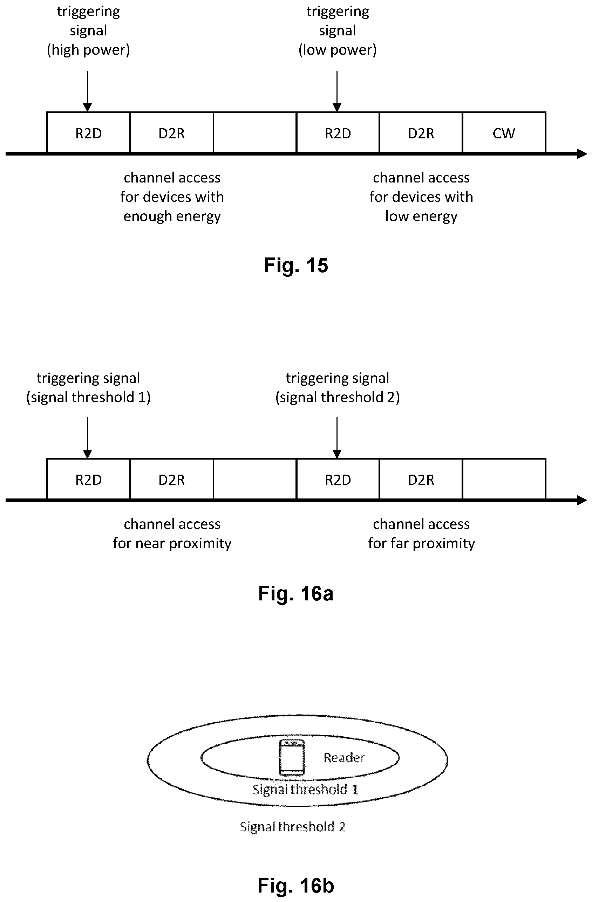

**Fig. 15** illustrates a triggering scheme according to this implementation of the embodiment. In a first trigger signal, a high power level is indicated as the criterion related to the power availability of the loT device. Accordingly, loT devices associated with a high power level may access the D2R channel following the reception of the trigger signal. In a second trigger signal, the reader may indicate a low power level as the criterion. Accordingly, loT devices associated with a low power level may access the D2R channel following the reception of the trigger signal. If a response signal is transmitted by a low power level loT device and received by the reader, the reader becomes aware of the fact that an loT device is in a low power state and may transmit a carrier wave (CW) in order to allow the loT device to harvest energy to increase its power level.

With this approach, the reader can provide a CW for energy harvesting only when it is required by an loT device, which may allow for improving power consumption of the reader.

### Embodiment 8

According to an eight embodiment, the trigger signal indicates the criterion for a received signal strength of the trigger signal, wherein said criterion indicates a signal strength threshold. The loT device determines a received signal strength of the received trigger signal, and determines that the loT device may access the uplink channel if the determined received signal strength is equal to or above the signal strength threshold.

That is, the loT device may be triggered based on the received signal strength level. For example, the received signal strength level may be measured by DMRS of PRDCH and/or CW. The reader can indicate the signal strength threshold for a trigger signal. Accordingly, an loT device may respond to the trigger signal if the received signal strength is higher than the indicated signal strength threshold.

However, the present disclosure is not limited thereto, and the signal strength threshold may not be indicated by the trigger signal, but an loT device may be pre-configured or configured with a signal strength threshold.

**Fig. 16a** illustrates a triggering scheme according to an implementation of the embodiment. In this example, the reader sends two trigger signals, wherein the first trigger signal indicates a first signal strength threshold (signal threshold 1), and the second trigger signal indicates a second signal strength threshold (signal threshold 2). Accordingly, in response to reception of a trigger signal, only loT devices may access subsequent resources of the D2R channel if the received signal strength is above respective indicated threshold value.

If a response signal is transmitted by an loT device in response to the trigger signal, the reader may determine/estimate a proximity of the loT device. For instance, as illustrated in **Fig. 16b**, an loT device further away from the reader may respond only to the trigger signal indicating a low signal strength threshold, since the received signal strength may reduce with increasing distance of the loT device from the reader. Accordingly, the reader may determine or estimate a proximity of loT devices based on received responses to a trigger signal indicating a received signal strength threshold.

### Embodiment 9

According to a ninth embodiment, the trigger signal indicates one or more criteria and respective one or more resources of the uplink channel. The loT device determines whether any of the one or more criteria is met and, if at least one of the one or more criteria is met, determines respective resources of the uplink channel, and determines that the loT device may access the uplink channel using the determined resources.

In an implementation, as exemplarily illustrated, for instance, in **Fig. 7**, the trigger signal may indicate one or more criteria and respective resources to be used by the loT device to access the uplink channel. In the example of **Fig. 7**, the criteria relate to the identifier associated with the loT device. However, the present disclosure is not limited thereto, and the criteria may relate to any measure as described in the other embodiments. Further, as exemplarily illustrated in **Figs. 9** **and** **11**, the trigger signal may indicate one criterion and respective resources to be used if the criterion is met.

Further, the indicated resource may relate to a resource in time (e.g. slots) and/or in frequency.

For example, the trigger signal includes a bandwidth indicator indicating a bandwidth of the uplink channel to be used if the at least one of the one or more criteria is met, as exemplarily illustrated in and described above with reference to **Fig. 12**.

### Embodiment 10

According to a tenth embodiment, the node determines a transmitted signal strength of a trigger signal for determination of whether or not an loT device may access an uplink channel for data transmission, based on the trigger signal and a condition, and transmits a trigger signal according to the determined transmitted signal strength.

The loT device determines a received signal strength of the trigger signal, and determines that the loT device may access the uplink channel if the determined received signal strength is equal to or above a signal strength threshold.

Alternatively, the loT device determines a received signal strength of the trigger signal, and determines that the loT device may access the uplink channel if the determined received signal strength is below a signal strength threshold.

In other words, for triggering the loT device to access the D2R channel, the node may adjust the transmission power of the trigger signal. That is, the node may transmit the trigger signal with different transmission power levels at different transmission occasions. This may also facilitate for proximity determination by the node.

Upon reception of the trigger signal, the loT device may respond by accessing the D2R channel and transmitting data via the channel. For example, the loT device may transmit a response signal in response to reception of any trigger signal, in response to reception of a trigger signal having a received signal strength above a signal strength threshold, or in response to reception of a trigger signal having a received signal strength lower than a signal strength threshold.

Optionally, the node may indicate the transmitted signal power level in the trigger signal. In addition or alternatively, the loT device may report the received signal strength in the response signal to the node.

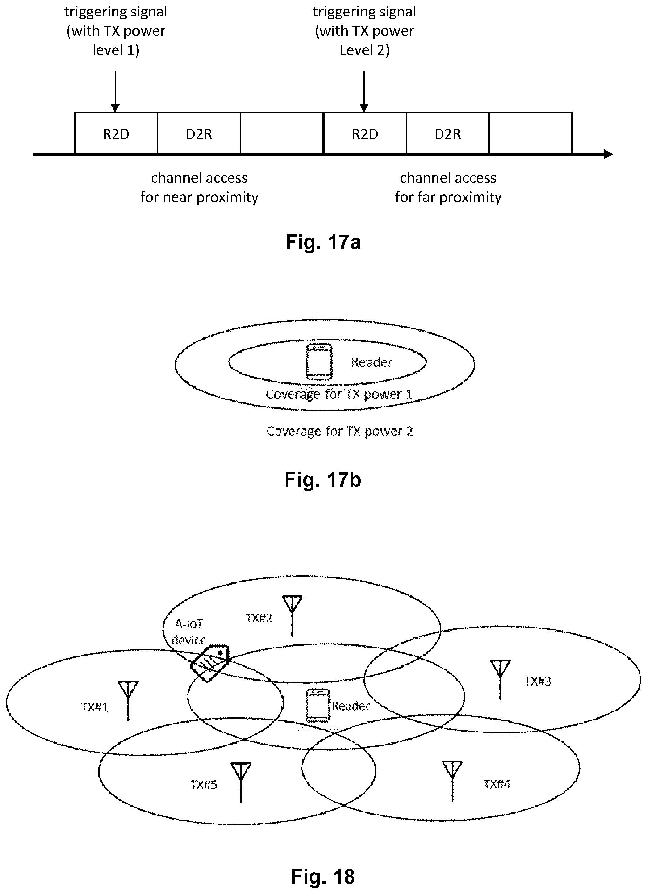

**Fig. 17a and 17b** illustrate a triggering scheme according to an implementation of the embodiment and a potential scenario, wherein an loT device further away from the reader may not respond to the trigger signal transmitted with a low signal strength, due to the trigger signal not being successfully received by the loT device. Specifically, in the illustrated example, the node transmits a first trigger signal and a second trigger signal with different power levels. In the first trigger signal, a first transmission (TX) power is used, which may be a low TX power level. In the second trigger signal, a second TX power is used, which may be higher than the TX power of the first trigger level. Respective coverage areas of the trigger signal with TX power 1 and TX power 2 are illustrated in **Fig. 17b**. As it is apparent from **Fig. 17b**, only loT devices within the coverage area for a trigger signal with TX power 1 may respond to the first trigger signal. Therefore, the node may determine a distance and/or proximity of respective loT devices, if a response signal is received. On the other hand, loT devices within the coverage area for the trigger signal with TX power 2 may respond to the second trigger signal, allowing the node to determine respective distances and/or proximities.

Since also loT devices within coverage area for TX power 1 may receive the trigger signal with TX power 2, loT devices may be configured not to transmit a response signal to a trigger signal if such a response signal has been transmitted in response to reception of a trigger signal within a predetermined time period prior to a current time. With this approach, the node may determine the proximity and/or distance of an loT device within coverage area for TX power 2.

According to this embodiment, the node may trigger the loT devices to access the D2R channel and, further, may determine a proximity and/or distance of loT devices according to response signals received from respective loT devices. Further, since there is no comparison of a received signal strength of the trigger signal with a threshold to be performed by the loT devices, a simpler implementation and/or a reduction of processing amount by the loT devices may be achieved.

In an implementation, the loT device may adjust a probability of response/data transmission of back-off time, for example for an ALOHA type channel access (Aloha random access), according to a detected received signal strength of the trigger signal. For example, a device that is closer to a node and, accordingly, may determine a relatively high received signal strength of the trigger signal, may respond to the trigger signal with a lower probability or higher back-off time compared to an loT device that is located further away, and therefore determines a lower received signal strength of the trigger signal.

In an implementation, the loT device may determine a number of data transmission repetitions according to the detected received signal strength. For example, an loT device that determines a relatively high received signal strength (e.g. equal to or above a certain threshold), may determine a lower number of data transmission repetitions than an loT device having determined a relatively low received signal strength (e.g. below the threshold). In other words, the loT device may determine a received signal strength of the trigger signal and determine whether the received signal strength is equal to or above a threshold. If the received signal strength is equal to or above the threshold, the loT device may determine a first number of data transmission repetitions. If the receive signal strength is below the threshold, the loT device may determine a second number of data transmission repetitions, the second number being higher than the first number.

With such an approach, channel fairness may be ensured for devices with different channel quality.

### Embodiment 11

According to an eleventh embodiment, a node transmits one or more trigger signals to an Internet of Thing, loT device, wherein each of the one or more trigger signals is transmitted via a different transmission point, and receives a response signal from the loT device, wherein the response signal indicates the transmission points via which the respective trigger signals were received by the loT device. Further, the node determines a direction to and/or a location of the loT device according to the indicated transmission points.

According to the embodiment, an loT device receives the one or more trigger signals, wherein each of the one or more trigger signals is received from a node via a different transmission point, and transmits a response signal to the node, wherein the response signal indicates the transmission points via which the respective trigger signals were received.

In other words, the trigger signals may be transmitted from several points and/or over different beams, while the loT device reports the detected signal points and/or beams. For example, the transmission points could be base stations, BS, user equipments, UE, CW nodes, or other devices.

This approach may allow for proximity, distance, and/or direction determination of loT devices by the node, without complex operations at the loT device side.

**Fig. 18** illustrates a triggering scheme, wherein a trigger signal is transmitted via multiple transmission points, according to the embodiment. In this example, trigger signals are transmitted by a node (reader) from five different transmission points (TX#1 to TX#5). When an loT device receives a trigger signal, it transmits a response signal to the node indicating the transmission points, from which the trigger signals have been received. This allows the reader, using information on the positions and/or transmission strengths of the transmission points, to determine a location, proximity, distance of or direction to the loT device. In the illustrated example, the loT device is located with coverage areas of TX#1 and TX#2. Accordingly, the response signal transmitted by the loT device indicates said transmission points. The reader (node) may determine the location of the loT device based on the received response signal and the indicated transmission points. In the illustrated example, the reader may determine that the loT device is located within the overlapping area of coverage areas of TX#1 and TX#2.

### Further implementations

As mentioned above, there may be numerous loT devices communicating with a node. The loT devices may not have the legacy RRC states, ARQ, and HARQ. Therefore, a contention-based channel may be used to initiate communication. However, this could cause excessive attempts for channel access, which may result in collisions and performance degradation. Further, proximity/distance/direction determination might be required for a node. Further, some loT devices have a limited energy capacity. The energy could be obtained from the environment (vibration, light, heat) or a carrier wave, e.g., provided by the gNB/intermediate node. It may implement, e.g. repetitions to increase robustness.

To facilitate the communication considering the mentioned limitations, the loT may determine whether to access an uplink channel based on a received trigger signal and a condition, which may be pre-obtained or indicated by the trigger signal.

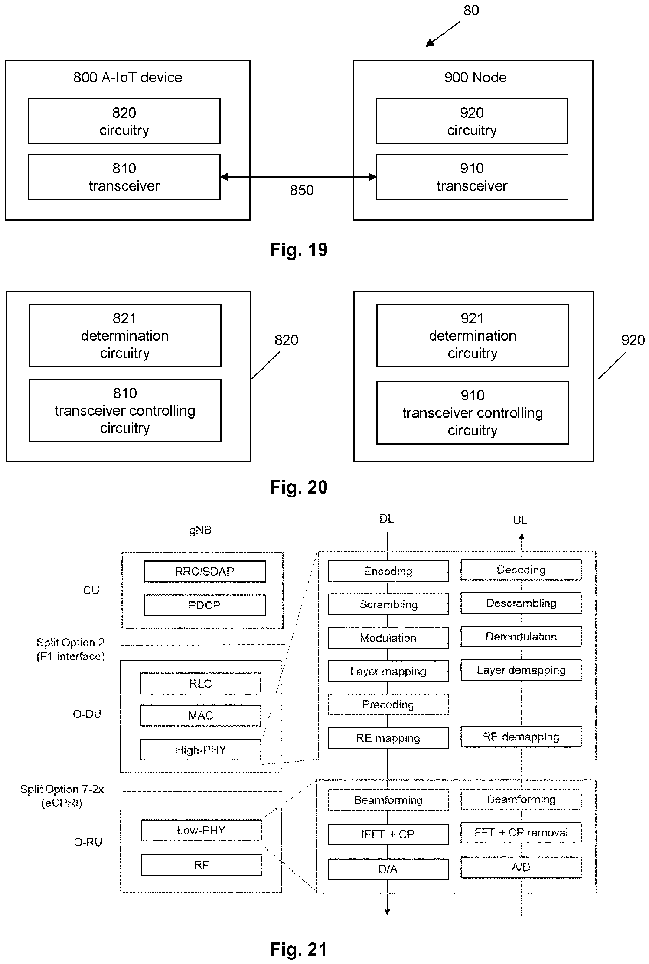

**Fig. 19** illustrates a general, simplified and exemplary block diagram of an loT device 800 and a node (base station or intermediate node connected to a base station) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (loT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a trigger signal. The circuitry 920 of the loT device 800 determines whether or not the loT device 800 may access an uplink channel for data transmission, based on the trigger signal and a condition which is pre-obtained or indicated by the trigger signal.

In some embodiments, the circuitry 920 of the base station 900 determines a condition for determination of whether or not an loT device 800 may access an uplink channel for data transmission. The transceiver 910 of the base station 900 transmits a trigger signal indicating the condition.

In some embodiments, the circuitry 920 of the base station 900 determines a transmitted signal strength of a trigger signal for determination of whether or not an loT device 800 may access an uplink channel for data transmission, based on the trigger signal and a condition. The transceiver 910 of the base station 900 transmits a trigger signal according to the determined transmitted signal strength.

The circuitries may be configured by software to perform the functions as described in any of the above embodiments. As shown in **Fig. 20**, the circuitry 820 of the loT device may further comprise a functional module referred to as determination circuitry 821 for performing the determination. A transceiver controlling circuitry 823 is a functional module that controls the transceiver 810 to receive the trigger signal. Moreover, as shown in **Fig. 20**, the circuitry 920 of the base station 900 or an intermediate node may further comprise a functional module referred to as determination circuitry 921 for performing any determinations. A transceiver controlling circuitry 923 is a functional module that controls the transceiver 910 to transmit the trigger signal.

Moreover, it is noted that the loT device as described in any of the above embodiments and examples, may be integrated on an integrated circuit (IS). Moreover, the integration does not necessary include the entire transceiver. The transceiver is, in general, not necessarily a part of the loT device. The loT may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above mentioned embodiments and examples.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 21** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween. Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, provided is an Internet of Things, loT, device, comprising a transceiver which, in operation, receives a trigger signal; and circuitry which, in operation, determines whether or not the loT device may access an uplink channel for data transmission, based on the trigger signal and a condition which is pre-obtained or indicated by the trigger signal.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal. The circuitry, in operation, determines that the loT device may access the uplink channel if the identifier associated with the loT device, the priority associated with the loT device, the data to be transmitted by the loT device, the power availability of the loT device, and/or the received signal strength of the trigger signal meets the respective criterion.

According to an embodiment, the trigger signal indicates the criterion for the identifier associated with the loT device; said criterion indicates a value of a function, which maps identifiers to respective values; and the circuitry, in operation applies the function to the identifier associated with the loT device, and determines that the loT device may access the uplink channel if the result of the function applied to the identifier associated with the loT device corresponds to the value indicated by said criterion.

According to an embodiment, the trigger signal indicates the criterion for the identifier associated with the loT device, wherein said criterion indicates a group identifier; and the circuitry, in operation, determines that the loT device may access the uplink channel if the loT device belongs to a group associated with the indicated group identifier.

According to an embodiment, the trigger signal indicates the criterion for the priority associated with the loT device; and the circuitry, in operation determines the priority associated with the loT device according to (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device; and the circuitry, in operation, determines that the loT device may access the uplink channel if the determined priority meets said criterion.

According to an embodiment, the trigger signal indicates the criterion for the data to be transmitted by the loT device; said criterion relates to at least one of an amount of the data, a type of the data, and/or a delay budget for transmission of the data.

According to an embodiment, the trigger signal indicates the criterion for power availability of the loT device; said criterion indicates a power level; and the circuitry, in operation, determines a power level of the loT device according to an available amount of power, and determines that the loT device may access the uplink channel if the determined power level of the loT device corresponds to the power level indicated by said criterion.

According to an embodiment, the trigger signal indicates the criterion for a received signal strength of the trigger signal; said criterion indicates a signal strength threshold; and the circuitry, in operation, determines a received signal strength of the received trigger signal, and determines that the loT device may access the uplink channel if the determined received signal strength is equal to or above the signal strength threshold.

According to an embodiment, the trigger signal indicates one or more criteria and respective one or more resources of the uplink channel; the circuitry, in operation, determines whether any of the one or more criteria is met; if at least one of the one or more criteria is met, determines respective resources of the uplink channel, and determines that the loT device may access the uplink channel using the determined resources.

According to an embodiment, the trigger signal includes a bandwidth indicator indicating a bandwidth of the uplink channel to be used if the at least one of the one or more criteria is met.

According to an embodiment, if the circuitry determines that the loT device may access the uplink channel and a power level of the loT device is equal to or less than a predetermined power level, the transceiver, in operation, transmits data via the uplink channel, receives a carrier wave, and harvests power from said carrier wave.

According to an embodiment, the loT device further comprises a power management unit which, in operation, harvests electric energy from a carrier wave received from the node.

According to an embodiment, the circuitry, in operation, determines a received signal strength of the trigger signal, and the circuitry, in operation, determines that the loT device may access the uplink channel if the determined received signal strength is equal to or above a signal strength threshold, or determines that the loT device may access the uplink channel if the determined received signal strength is below the signal strength threshold.

According to an embodiment, the transceiver, in operation, receives one or more trigger signals, wherein each of the one or more trigger signals is received from a node via a different transmission point, and transmits a response signal to the node, wherein the response signal indicates the transmission points via which the respective trigger signals were received.

According to an embodiment, the node is one of a base station and an intermediate node connected to a base station.

According to a second aspect, it is provided a node, comprising circuitry which, in operation, determines a condition for determination of whether or not an loT device may access an uplink channel for data transmission; and a transceiver which, in operation, transmits a trigger signal indicating the condition.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal.

According to an embodiment, the trigger signal indicates the criterion for the identifier associated with the loT device; and said criterion indicates a value of a function, which maps identifiers to respective values.

According to an embodiment, the trigger signal indicates the criterion for the identifier associated with the loT device, wherein said criterion indicates a group identifier.

According to an embodiment, the trigger signal indicates the criterion for the priority associated with the loT device, wherein the priority relates to at least one of (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device.

According to an embodiment, the trigger signal indicates the criterion for the data to be transmitted by the loT device; and said criterion relates to at least one of an amount of the data, a type of the data, and/or a delay budget for transmission of the data.

According to an embodiment, the trigger signal indicates the criterion for power availability of the loT device; and said criterion indicates a power level, wherein the power level relates to a power level of the loT device according to an available amount of power.

According to an embodiment, the trigger signal indicates the criterion for a received signal strength of the trigger signal; and said criterion indicates a signal strength threshold.

According to an embodiment, the circuitry, in operation, determines one or more resources of the uplink channel; and the trigger signal indicates one or more criteria and respective one or more resources of the uplink channel.

According to an embodiment, the circuitry, in operation, determines a bandwidth of the uplink channel to be used if the at least one of the one or more criteria is met; and the trigger signal includes a bandwidth indicator indicating the bandwidth.

According to an embodiment, the transceiver, in operation, receives data via the uplink channel in response to the trigger signal, and transmits a carrier wave for energy harvesting by the loT device.

According to an embodiment, the transceiver, in operation, transmits one or more trigger signals to an Internet of Thing, loT device, wherein each of the one or more trigger signals is transmitted via a different transmission point, and receives a response signal from the loT device, wherein the response signal indicates the transmission points via which the respective trigger signals were received by the loT device; and the circuitry, in operation, determines a direction to and/or a location of the loT device according to the indicated transmission points.

According to an embodiment, the circuitry, in operation, determines a transmitted signal strength; and the transceiver, in operation, transmits a trigger signal according to the determined transmitted signal strength, and receives a response signal from an Internet of Things, loT, device, wherein the circuitry, in operation, determines a proximity or a distance of the loT device according to the response signal.

According to a third aspect, provided is a node, comprising circuitry which, in operation, determines a transmitted signal strength of a trigger signal for determination of whether or not an loT device may access an uplink channel for data transmission, based on the trigger signal and a condition; and a transceiver which, in operation, transmits a trigger signal according to the determined transmitted signal strength.

According to an embodiment, the circuitry, in operation, determines one or more resources of the uplink channel; and the trigger signal indicates one or more criteria and respective one or more resources of the uplink channel.

According to an embodiment, the circuitry, in operation, determines a bandwidth of the uplink channel to be used if the at least one of the one or more criteria is met; and the trigger signal includes a bandwidth indicator indicating the bandwidth.

According to an embodiment, the transceiver, in operation, receives data via the uplink channel in response to the trigger signal, and transmits a carrier wave for energy harvesting by the loT device.

According to an embodiment, the transceiver, in operation, transmits one or more trigger signals to an Internet of Thing, loT device, wherein each of the one or more trigger signals is transmitted via a different transmission point, and receives a response signal from the loT device, wherein the response signal indicates the transmission points via which the respective trigger signals were received by the loT device; and the circuitry, in operation, determines a direction to and/or a location of the loT device according to the indicated transmission points.

According to a fourth aspect, provided is a node, comprising a transceiver which, in operation, transmits one or more trigger signals to an Internet of Thing, loT device, wherein each of the one or more trigger signals is transmitted via a different transmission point, and receives a response signal from the loT device, wherein the response signal indicates the transmission points via which the respective trigger signals were received by the loT device; and circuitry which, in operation, determines a direction to and/or a location of the loT device according to the indicated transmission points.

According to an embodiment, the circuitry, in operation, determines a condition for determination of whether or not an loT device may access an uplink channel for data transmission; and the transceiver, in operation, transmits the trigger signals indicating the condition.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal.

According to an embodiment, the trigger signal indicates the criterion for the identifier associated with the loT device; and said criterion indicates a value of a function, which maps identifiers to respective values.

According to an embodiment, the trigger signal indicates the criterion for the identifier associated with the loT device, wherein said criterion indicates a group identifier.

According to an embodiment, the trigger signal indicates the criterion for the priority associated with the loT device, wherein the priority relates to at least one of (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device.

According to an embodiment, the trigger signal indicates the criterion for the data to be transmitted by the loT device; and said criterion relates to at least one of an amount of the data, a type of the data, and/or a delay budget for transmission of the data.

According to an embodiment, the trigger signal indicates the criterion for power availability of the loT device; and said criterion indicates a power level, wherein the power level relates to a power level of the loT device according to an available amount of power.

According to an embodiment, the trigger signal indicates the criterion for a received signal strength of the trigger signal; and said criterion indicates a signal strength threshold.

According to an embodiment, the circuitry, in operation, determines one or more resources of the uplink channel; and the trigger signal indicates one or more criteria and respective one or more resources of the uplink channel.

According to an embodiment, the circuitry, in operation, determines a bandwidth of the uplink channel to be used if the at least one of the one or more criteria is met; and the trigger signal includes a bandwidth indicator indicating the bandwidth.

According to an embodiment, the transceiver, in operation, receives data via the uplink channel in response to the trigger signal, and transmits a carrier wave for energy harvesting by the loT device.

According to an embodiment, the circuitry, in operation, determines a transmitted signal strength; and the transceiver, in operation, transmits a trigger signal according to the determined transmitted signal strength, and receives a response signal from an Internet of Things, loT, device, wherein the circuitry, in operation, determines a proximity or a distance of the loT device according to the response signal.

According to a fifth aspect, provided is a communication system comprising the loT device according to first aspect or any embodiment/implementation thereof and a node according to any one of the second to fourth aspect or any embodiment/implementation thereof.

According to an embodiment, the circuitry mentioned above (in any of the aspects or embodiments of the loT device or the node) is embodied on an integrated circuit. The integrated circuit may also include the transceiver or may include a port connectable to a transceiver. Over the port, the integrated circuit may receive and transmit signals from and to the transceiver, respectively.

According to a sixth aspect, provided a method for an Internet of Things, loT device, comprising receiving a trigger signal; and determining whether or not the loT device may access an uplink channel for data transmission, based on the trigger signal and a condition which is pre-obtained or indicated by the trigger signal.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal. The method comprises determining that the loT device may access the uplink channel if the identifier associated with the loT device, the priority associated with the loT device, the data to be transmitted by the loT device, the power availability of the loT device, and/or the received signal strength of the trigger signal meets the respective criterion.

According to an embodiment, the trigger signal indicates the criterion for the identifier associated with the loT device; said criterion indicates a value of a function, which maps identifiers to respective values; and the method comprises applying the function to the identifier associated with the loT device, and determining that the loT device may access the uplink channel if the result of the function applied to the identifier associated with the loT device corresponds to the value indicated by said criterion.

According to an embodiment, the trigger signal indicates the criterion for the identifier associated with the loT device, wherein said criterion indicates a group identifier; and the method comprises determining that the loT device may access the uplink channel if the loT device belongs to a group associated with the indicated group identifier.

According to an embodiment, the trigger signal indicates the criterion for the priority associated with the loT device; and the method comprises determining the priority associated with the loT device according to (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device; and the determining that the loT device may access the uplink channel if the determined priority meets said criterion.

According to an embodiment, the trigger signal indicates the criterion for the data to be transmitted by the loT device; and said criterion relates to at least one of an amount of the data, a type of the data, and/or a delay budget for transmission of the data.

According to an embodiment, the trigger signal indicates the criterion for power availability of the loT device; said criterion indicates a power level; and the method comprises determining a power level of the loT device according to an available amount of power, and determining that the loT device may access the uplink channel if the determined power level of the loT device corresponds to the power level indicated by said criterion.

According to an embodiment, the trigger signal indicates the criterion for a received signal strength of the trigger signal; said criterion indicates a signal strength threshold; and the method comprises determining a received signal strength of the received trigger signal, and determining that the loT device may access the uplink channel if the determined received signal strength is equal to or above the signal strength threshold.

According to an embodiment, the trigger signal indicates one or more criteria and respective one or more resources of the uplink channel; and the method comprises determining whether any of the one or more criteria is met; if at least one of the one or more criteria is met, determining respective resources of the uplink channel, and determining that the loT device may access the uplink channel using the determined resources.

According to an embodiment, the trigger signal includes a bandwidth indicator indicating a bandwidth of the uplink channel to be used if the at least one of the one or more criteria is met.

According to an embodiment, if it is determined that the loT device may access the uplink channel and a power level of the loT device is equal to or less than a predetermined power level, the method comprises transmitting data via the uplink channel, receiving a carrier wave, and harvesting power from said carrier wave.

According to an embodiment, the method comprises determining a received signal strength of the trigger signal; and determining that the loT device may access the uplink channel if the determined received signal strength is equal to or above a signal strength threshold, or determining that the loT device may access the uplink channel if the determined received signal strength is below the signal strength threshold.

According to an embodiment, the method comprises receiving one or more trigger signals, wherein each of the one or more trigger signals is received from a node via a different transmission point, and transmitting a response signal to the node, wherein the response signal indicates the transmission points via which the respective trigger signals were received.

According to an embodiment, the node is one of a base station and an intermediate node connected to a base station.

The method of the sixth aspect or any embodiment/implementation thereof may be implemented in the loT device according to the first aspect or any embodiment/implementation thereof.

According to a seventh aspect, provided is a method for a node, comprising determining a condition for determination of whether or not an loT device may access an uplink channel for data transmission; and transmitting a trigger signal indicating the condition.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal.

According to an embodiment, the trigger signal indicates the criterion for the identifier associated with the loT device; and said criterion indicates a value of a function, which maps identifiers to respective values.

According to an embodiment, the trigger signal indicates the criterion for the identifier associated with the loT device, wherein said criterion indicates a group identifier.

According to an embodiment, the trigger signal indicates the criterion for the priority associated with the loT device, wherein the priority relates to at least one of (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device.

According to an embodiment, the trigger signal indicates the criterion for the data to be transmitted by the loT device; and said criterion relates to at least one of an amount of the data, a type of the data, and/or a delay budget for transmission of the data.

According to an embodiment, the trigger signal indicates the criterion for power availability of the loT device; and said criterion indicates a power level, wherein the power level relates to a power level of the loT device according to an available amount of power.

According to an embodiment, the trigger signal indicates the criterion for a received signal strength of the trigger signal; and said criterion indicates a signal strength threshold.

According to an embodiment, the method comprises determining one or more resources of the uplink channel, wherein the trigger signal indicates one or more criteria and respective one or more resources of the uplink channel.

According to an embodiment, the method comprises determining a bandwidth of the uplink channel to be used if the at least one of the one or more criteria is met, wherein the trigger signal includes a bandwidth indicator indicating the bandwidth.

According to an embodiment, the method comprises receiving data via the uplink channel in response to the trigger signal; and transmitting a carrier wave for energy harvesting by the loT device.

According to an embodiment, the method comprises transmitting one or more trigger signals to an Internet of Thing, loT device, wherein each of the one or more trigger signals is transmitted via a different transmission point; receiving a response signal from the loT device, wherein the response signal indicates the transmission points via which the respective trigger signals were received by the loT device; and determining a direction to and/or a location of the loT device according to the indicated transmission points.

According to an embodiment, the method comprises determining a transmitted signal strength; transmitting a trigger signal according to the determined transmitted signal strength; receiving a response signal from an Internet of Things, loT, device; and determining a proximity or a distance of the loT device according to the response signal.

The method of the seventh aspect or any embodiment/implementation thereof may be implemented in the node according to the second aspect or any embodiment/implementation thereof.

According to an eighth aspect, provided is a method for a node, comprising determining a transmitted signal strength of a trigger signal for determination of whether or not an loT device may access an uplink channel for data transmission, based on the trigger signal and a condition; and transmitting a trigger signal according to the determined transmitted signal strength.

According to an embodiment, the method comprises determining one or more resources of the uplink channel, wherein the trigger signal indicates one or more criteria and respective one or more resources of the uplink channel.

According to an embodiment, the method comprises determining a bandwidth of the uplink channel to be used if the at least one of the one or more criteria is met, wherein the trigger signal includes a bandwidth indicator indicating the bandwidth.

According to an embodiment, the method comprises receiving data via the uplink channel in response to the trigger signal, and transmitting a carrier wave for energy harvesting by the loT device.

According to an embodiment, the method comprises transmitting one or more trigger signals to an Internet of Thing, loT device, wherein each of the one or more trigger signals is transmitted via a different transmission point; receiving a response signal from the loT device, wherein the response signal indicates the transmission points via which the respective trigger signals were received by the loT device; and determining a direction to and/or a location of the loT device according to the indicated transmission points

The method of the eighth aspect or any embodiment/implementation thereof may be implemented in the node according to the third aspect or any embodiment/implementation thereof.

According to a ninth aspect, provided is a method for a node, comprising transmitting one or more trigger signals to an Internet of Thing, loT device, wherein each of the one or more trigger signals is transmitted via a different transmission point; receiving a response signal from the loT device, wherein the response signal indicates the transmission points via which the respective trigger signals were received by the loT device; and determining a direction to and/or a location of the loT device according to the indicated transmission points.

According to an embodiment, the method comprises determining a condition for determination of whether or not an loT device may access an uplink channel for data transmission; and transmitting the trigger signals indicating the condition.

According to an embodiment, the condition is one or more of (i) a criterion for an identifier associated with the loT device, (ii) a criterion for a priority associated with the loT device, (iii) a criterion for data to be transmitted by the loT device, (iv) a criterion for power availability of the loT device, and (v) a criterion for a received signal strength of the trigger signal.

According to an embodiment, the trigger signal indicates the criterion for the identifier associated with the loT device; and said criterion indicates a value of a function, which maps identifiers to respective values.

According to an embodiment, the trigger signal indicates the criterion for the identifier associated with the loT device, wherein said criterion indicates a group identifier.

According to an embodiment, the trigger signal indicates the criterion for the priority associated with the loT device, wherein the priority relates to at least one of (i) a configured priority; (ii) a time period from a timing of a latest transmission of data by the loT device to a timing of receiving the trigger signal, (iii) a number of failed transmissions of data by the loT device, and/or (iv) a number of consecutive negative acknowledgement, NACK, signals received and/or transmitted by the loT device.

According to an embodiment, the trigger signal indicates the criterion for the data to be transmitted by the loT device; and said criterion relates to at least one of an amount of the data, a type of the data, and/or a delay budget for transmission of the data.

According to an embodiment, the trigger signal indicates the criterion for power availability of the loT device; and said criterion indicates a power level, wherein the power level relates to a power level of the loT device according to an available amount of power.

According to an embodiment, the trigger signal indicates the criterion for a received signal strength of the trigger signal; and said criterion indicates a signal strength threshold.

According to an embodiment, the method comprises determining one or more resources of the uplink channel, wherein the trigger signal indicates one or more criteria and respective one or more resources of the uplink channel.

According to an embodiment, the method comprises determining a bandwidth of the uplink channel to be used if the at least one of the one or more criteria is met, wherein the trigger signal includes a bandwidth indicator indicating the bandwidth.

According to an embodiment, the method comprises receiving data via the uplink channel in response to the trigger signal; and transmitting a carrier wave for energy harvesting by the loT device.

According to an embodiment, the method comprises determining a transmitted signal strength; transmitting a trigger signal according to the determined transmitted signal strength; receiving a response signal from an Internet of Things, loT, device; and determining a proximity or a distance of the loT device according to the response signal.

The method of the ninth aspect or any embodiment/implementation thereof may be implemented in the node according to the fourth aspect or any embodiment/implementation thereof.

Moreover, in an embodiment, a computer program is provided including code instructions stored on a non-transitory medium, which when executed on one or more processor, causes the one or more processors to execute a method according to any of the above-mentioned embodiments and examples.

## Claims

1. An Internet of Things, loT, device, comprising
a transceiver which, in operation, receives a trigger signal; and
circuitry which, in operation, determines whether or not the loT device may access an uplink channel for data transmission, based on the trigger signal and a condition which is pre-obtained or indicated by the trigger signal.

2. The loT device according to claim 1, wherein
the condition is one or more of
• a criterion for an identifier associated with the loT device,
• a criterion for a priority associated with the loT device,
• a criterion for data to be transmitted by the loT device,
• a criterion for power availability of the loT device, and
• a criterion for a received signal strength of the trigger signal; and
the circuitry, in operation, determines that the loT device may access the uplink channel if the identifier associated with the loT device, the priority associated with the loT device, the data to be transmitted by the loT device, the power availability of the loT device, and/or the received signal strength of the trigger signal meets the respective criterion.

3. The loT device according to claim 2, wherein
the trigger signal indicates the criterion for the identifier associated with the loT device;
said criterion indicates a value of a function, which maps identifiers to respective values; and the circuitry, in operation
applies the function to the identifier associated with the loT device, and
determines that the loT device may access the uplink channel if the result of the function applied to the identifier associated with the loT device corresponds to the value indicated by said criterion.

4. The loT device according to claim 2, wherein
the trigger signal indicates the criterion for the identifier associated with the loT device, wherein
said criterion indicates a group identifier; and
the circuitry, in operation, determines that the loT device may access the uplink channel if the loT device belongs to a group associated with the indicated group identifier.

5. The loT device according to any one of claims 2 to 4, wherein
the trigger signal indicates the criterion for the priority associated with the loT device; and
the circuitry, in operation determines the priority associated with the loT device according to
• a configured priority,
• a time period from a timing of a latest transmission of data by the loT device to a timing of receiving the trigger signal,
• a number of failed transmissions of data by the loT device, and/or
• a number of consecutive negative acknowledgement, NACK, signals received and/or transmitted by the loT device; and
the circuitry, in operation, determines that the loT device may access the uplink channel if the determined priority meets said criterion.

6. The loT device according to any one of claims 2 to 5, wherein
the trigger signal indicates the criterion for the data to be transmitted by the loT device; and
said criterion relates to at least one of an amount of the data, a type of the data, and/or a delay budget for transmission of the data.

7. The loT device according to any one of claims 2 to 6, wherein
the trigger signal indicates the criterion for power availability of the loT device;
said criterion indicates a power level; and
the circuitry, in operation,
determines a power level of the loT device according to an available amount of power, and
determines that the loT device may access the uplink channel if the determined power level of the loT device corresponds to the power level indicated by said criterion.

8. The loT device according to any one of claims 2 to 7, wherein
the trigger signal indicates the criterion for a received signal strength of the trigger signal;
said criterion indicates a signal strength threshold; and
the circuitry, in operation,
determines a received signal strength of the received trigger signal, and
determines that the loT device may access the uplink channel if the determined received signal strength is equal to or above the signal strength threshold.

9. The loT device according to any one of claims 2 to 8, wherein
the trigger signal indicates one or more criteria and respective one or more resources of the uplink channel;
the circuitry, in operation,
determines whether any of the one or more criteria is met;
if at least one of the one or more criteria is met, determines respective resources of the uplink channel, and determines that the loT device may access the uplink channel using the determined resources.

10. The loT device according to claim 9, wherein
the trigger signal includes a bandwidth indicator indicating a bandwidth of the uplink channel to be used if the at least one of the one or more criteria is met.

11. The loT device according to any one of claims 1 to 10, wherein
if the circuitry determines that the loT device may access the uplink channel and a power level of the loT device is equal to or less than a predetermined power level, the transceiver, in operation,
transmits data via the uplink channel,
receives a carrier wave, and
harvests power from said carrier wave.

12. The loT device according to any one of claims 1 to 11, wherein
the circuitry, in operation, determines a received signal strength of the trigger signal, and
the circuitry, in operation,
determines that the loT device may access the uplink channel if the determined received signal strength is equal to or above a signal strength threshold,
or
determines that the loT device may access the uplink channel if the determined received signal strength is below the signal strength threshold.

13. The loT device according to any one of claim 1 to 12, wherein
the transceiver, in operation,
receives one or more trigger signals, wherein each of the one or more trigger signals is received from a node via a different transmission point, and
transmits a response signal to the node, wherein the response signal indicates the transmission points via which the respective trigger signals were received.

14. A node, comprising
circuitry which, in operation, determines a condition for determination of whether or not an loT device may access an uplink channel for data transmission; and
a transceiver which, in operation, transmits a trigger signal indicating the condition.

15. A node, comprising
circuitry which, in operation, determines a transmitted signal strength of a trigger signal for determination of whether or not an loT device may access an uplink channel for data transmission, based on the trigger signal and a condition; and
a transceiver which, in operation, transmits a trigger signal according to the determined transmitted signal strength.
